# EUROPEAN PATENT APPLICATION

(11) **EP 4 760 423 A1**
(43) Date of publication of application: **17.06.2026**
(21) Application number: 25222759.0
(22) Date of filing: 11.12.2025
(51) Int. Cl.: G05B 19/402

(54) **MACHINING COMPONENT USING SCAN DATA OF INTERNAL ARTIFACT(S)**

(30) Priority: 11.12.2024 US 202418977558
(71) Applicant: RTX Corporation, Farmington, CT 06032 (US)
(72) Inventor: CRAIG, Brian R., Tequesta, 33469 (US)
(74) Representative: Dehns

(57) **Abstract**

A method of manufacture is provided during which a component (20') with an external artifact (54) and an internal artifact (42) is scanned using a computed tomography machine (58) to provide scan data. The internal artifact (42) is disposed within an interior of the component (20'). External artifact data and internal artifact data are determined based on the scan data. The external artifact data is indicative of a physical characteristic of the external artifact (54). The internal artifact data is indicative of a physical characteristic of the internal artifact (42). A first external coordinate system is registered for the component (20') based on the external artifact data. An internal reference feature is registered for the component (20') based on the internal artifact data. Manufacturing data is provided for the component (20'). The internal reference feature is located within the first external coordinate system during the providing of the manufacturing data. A feature is formed into the component (20') using the manufacturing data.

## Description

### BACKGROUND OF THE INVENTION

### 1. Technical Field

This invention relates generally to a manufacturing method and, more particularly, to machining a component based on scan data.

### 2. Background Information

A gas turbine engine includes various fluid cooled components such as turbine blades and turbine vanes. Such fluid cooled components may include one or more cooling apertures. Various methods are known in the art for forming cooling apertures in a turbine engine component. While these known cooling aperture formation methods have various benefits, there is still room in the art for improvement.

### SUMMARY OF THE INVENTION

According to an aspect of the present invention, a method of manufacture is provided during which a component with an external artifact and an internal artifact is scanned using a computed tomography machine to provide scan data. The internal artifact is disposed within an interior of the component. External artifact data and internal artifact data are determined based on the scan data. The external artifact data is indicative of a physical characteristic of the external artifact. The internal artifact data is indicative of a physical characteristic of the internal artifact. A first external coordinate system is registered for the component based on the external artifact data. An internal reference feature is registered for the component based on the internal artifact data. Manufacturing data is provided for the component. The internal reference feature is located within the first external coordinate system during the providing of the manufacturing data. A feature is formed into the component using the manufacturing data.

According to another aspect of the present invention, another method of manufacture is provided during which a component assembly is computed tomography scanned to provide scan data. The component assembly includes a component, a fixture and an external artifact. The component is mounted to the fixture and includes an internal artifact within an interior of the component. The external artifact is arranged external to the component. External artifact data and internal artifact data are determined based on the scan data. The external artifact data is indicative of a scanned geometry of the external artifact. The internal artifact data is indicative of a scanned geometry of the internal artifact. A first external coordinate system is registered for the component based on the external artifact data. An internal reference point is registered for the component based on the internal artifact data. A machining program is updated based on data indicative of or derived from a location of the internal reference point within the first external coordinate system to provide an updated machining program. A feature is machined into the component using the updated machining program.

According to still another aspect of the present invention, another method of manufacture is provided during which a component assembly is computed tomography scanned to provide scan data. The component assembly includes a component, a fixture and an external artifact. The component is mounted to the fixture and includes an internal artifact within an interior of the component. The external artifact is arranged external to the component. External artifact data and internal artifact data are determined based on the scan data. The external artifact data is indicative of a scanned geometry of the external artifact. The internal artifact data is indicative of a scanned geometry of the internal artifact. A first external coordinate system is registered for the component based on the external artifact data. An internal reference vector is registered for the component based on the internal artifact data. A machining program is updated based on data indicative of or derived from a location of the internal reference vector within the first external coordinate system to provide an updated machining program. A feature is machined into the component using the updated machining program.

The following optional features may be applied to any of the above aspects.

The scanning of the component may include scanning an external surface feature of the component. The manufacturing data may locate the internal reference feature relative to the external surface feature of the component within the first external coordinate system.

The forming of the feature into the component may include machining the feature into the component.

The forming of the feature into the component may include: updating a machining program for forming the feature into the component using the manufacturing data to provide an updated machining program; and machining the feature into the component using the updated machining program.

The method may also include registering a second external coordinate system for the component using a measurement device discrete from the computed tomography machine. The second external coordinate system may be identical to or relatable to the first external coordinate system. The machining of the feature into the component may be performed using the updated machining program and the second external coordinate system.

The method may also include communicating the manufacturing data from a first computer to a second computer. The manufacturing data for the component may be provided using the first computer. The machining of the feature into the component may be performed using the second computer.

The internal reference feature may be a reference point.

The internal reference feature may be a reference vector.

The component may be configured as or otherwise include an airfoil. The internal artifact may be disposed within an internal volume within the airfoil.

The internal artifact may be configured as or otherwise include an annular cylinder.

The internal artifact may be configured as or otherwise include an airflow turbulator within the component.

The internal artifact may be configured as or otherwise include a cooling element within the component.

The internal artifact may be configured as or otherwise include an aperture in the interior of the component.

The internal artifact may be one of a plurality of internal artifacts within the interior of the component. The internal artifact data may be indicative of a physical characteristic of each of the internal artifacts and/or a collective physical characteristic of the internal artifacts.

The external artifact may be one of a plurality of external artifacts scanned using the computed tomography machine. The external artifact data may be indicative of a physical characteristic of each of the external artifacts and/or a collective physical characteristic of the external artifacts.

The component may be mounted to a fixture. The external artifact may be connected to the fixture.

The external artifact may be connected to a member of the component.

The feature formed into the component may be a cooling aperture machined into the component.

The internal artifact may project into an internal volume within the component.

The internal artifact may be configured as or otherwise include a protrusion within the interior of the component.

The present invention may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a schematic illustration of a rotor blade shown with one or more cooling air circuits.
FIGS. 2 and 3 are sectional illustrations of the rotor blade with various cooling air circuit arrangements.
FIG. 4 is a schematic illustration of the rotor blade with one or more internal artifacts within an interior of the rotor blade.
FIGS. 5 and 6 are sectional illustrations of a portion of the rotor blade with various internal artifact protrusions.
FIG. 7 is a cutaway illustration of a portion of the rotor blade with an internal artifact aperture.
FIGS. 8-11 are perspective illustrations of various internal artifact geometries.
FIG. 12 is a flow diagram of a method of manufacture.
FIG. 13 is a schematic illustration of a component assembly during a scanning operation.
FIG. 14 is a schematic illustration of the component assembly during the scanning operation with another external artifact arrangement.
FIG. 15 is a schematic illustration of the component assembly during a measurement operation.
FIG. 16 is a schematic illustration of a portion of the component assembly during a machining operation.

### DETAILED DESCRIPTION

The present invention includes methods and systems for manufacturing an apertured component such as, but not limited to, a fluid cooled component. Herein, the term "manufacturing" may describe a method for forming the apertured component; e.g., creating a brand new apertured component. The term "manufacturing" may also or alternatively describe a method for reconditioning, repairing and/or otherwise remanufacturing the apertured component; e.g., restoring one or more features of a previously formed apertured component to brand new condition, similar to brand new condition, or better than brand new condition.

The apertured component may be a component of a powerplant for an aircraft. The aircraft may be an airplane, a rotorcraft (e.g., a helicopter), a drone (e.g., an unmanned aerial vehicle (UAV)), or any other manned or unmanned aerial vehicle or system. The aircraft powerplant may be configured as, or otherwise included as part of, a propulsion system for the aircraft. Examples of the aircraft propulsion system include, but are not limited to, a turbofan propulsion system, a turbojet propulsion system, a turboprop propulsion system, a propfan propulsion system, a pusher fan propulsion system, or the like. The aircraft powerplant may alternatively be configured as, or otherwise included as part of, an electrical power system for the aircraft. An example of the aircraft electrical power system is an auxiliary power unit (APU). The present invention, however, is not limited to such exemplary aircraft powerplants nor to aircraft applications. The powerplant, for example, may alternatively be configured as a ground-based industrial turbine engine for electrical power generation. However, for ease of description, the powerplant is described below as the aircraft powerplant.

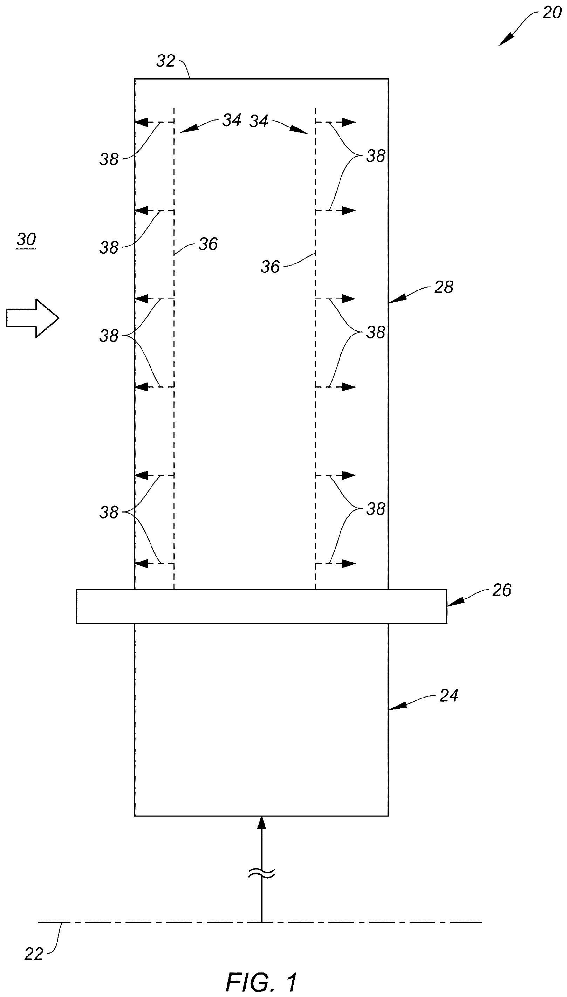

FIG. 1 illustrates an exemplary embodiment of the apertured component as a rotor blade 20; e.g., a turbine blade. A bladed engine rotor including an array of these rotor blades 20 (one visible in FIG. 1) is configured to rotate about a rotational axis 22. The rotor blade 20 of FIG. 1 includes an attachment 24, a platform 26 and an airfoil 28. The blade attachment 24 is configured to mount the rotor blade 20 to a base of the engine rotor; e.g., a rotor disk or a rotor hub. The blade attachment 24, for example, may be configured as a dovetail root or a firtree root which mates with a corresponding slot within the engine rotor base. The blade platform 26 is disposed between and connected to (e.g., formed integral with or otherwise attached to) the blade attachment 24 and the blade airfoil 28. This blade platform 26 is configured to form an inner peripheral boundary of an engine flowpath 30 into which the rotor blade 20 projects. The blade airfoil 28 projects spanwise (e.g., radially relative to the rotational axis 22) out from the blade platform 26, substantially across a radial height of the engine flowpath 30, to a radial outer tip 32 of the blade airfoil 28.

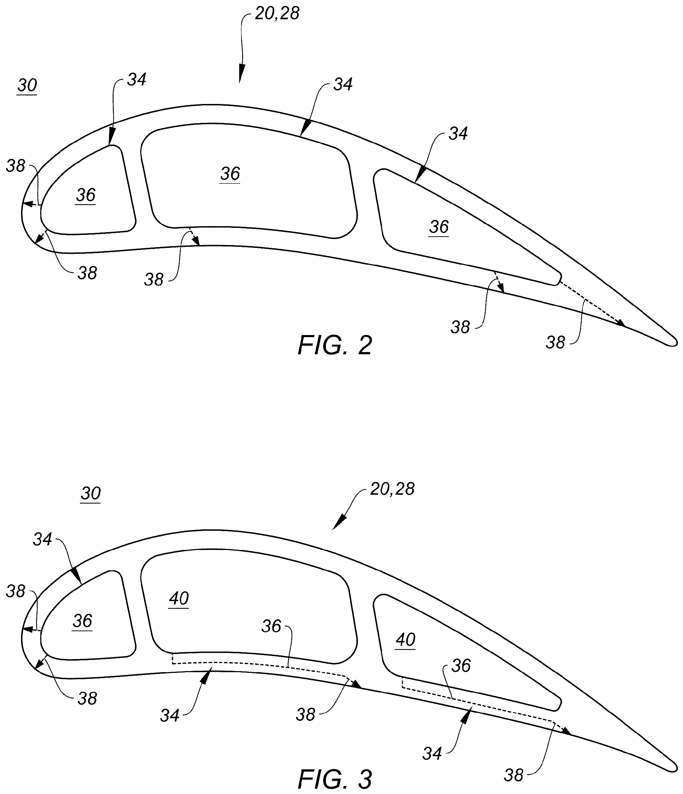

The rotor blade 20 of FIG. 1 includes one or more cooling air circuits 34. Each cooling air circuit 34 includes a distribution passage 36 and one or more cooling apertures 38. The distribution passage 36 extends within an interior of the rotor blade 20 and its blade airfoil 28. The distribution passage 36 is configured to distribute cooling air to its respective one or more cooling apertures 38. Referring to FIG. 2, the distribution passage 36 of one or more of the cooling air circuits 34 may each be configured as a central core passage extending within the rotor blade 20 and its blade airfoil 28. Alternatively, referring to FIG. 3, the distribution passage 36 of one or more of the cooling air circuits 34 may each be configured as a microcircuit passage extending within a sidewall of the rotor blade 20 and its blade airfoil 28. Such a microcircuit passage may be fluidly coupled to and feed cooling air from a central core passage 40 within the rotor blade 20 and its blade airfoil 28. Referring to FIGS. 2 and 3, each cooling aperture 38 projects through the sidewall of the blade airfoil 28 from the respective distribution passage 36 to an exterior surface of the rotor blade 20; e.g., an exterior surface of the blade airfoil 28. Each cooling aperture 38 thereby fluidly couples the respective distribution passage 36 to the engine flowpath 30 outside of the rotor blade 20 and its blade airfoil 28. One or more of the cooling apertures 38 may be configured as effusion cooling apertures in order to facilitate, for example, film cooling of one or more respective downstream portions of the rotor blade exterior. The present invention, however, is not limited to such an exemplary rotor blade cooling arrangement. For example, while the cooling air circuits 34 of FIG. 1 are described above as servicing (e.g., cooling) the blade airfoil 28, it is contemplated one or more of the cooling air circuits 34 may also or alternatively service (e.g., cool) the blade platform 26.

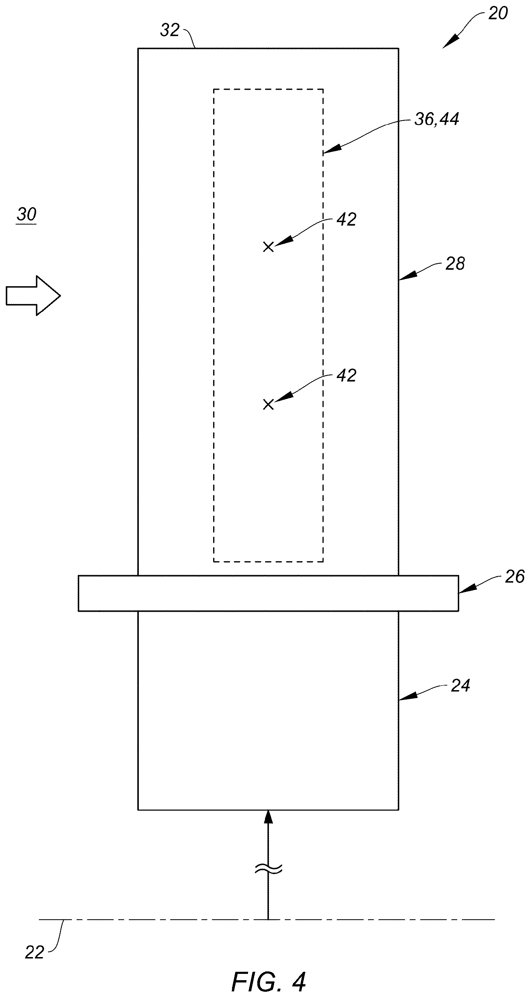

Referring to FIG. 4, the rotor blade 20 is configured with one or more internal artifacts 42 within the interior of the rotor blade 20 and its blade airfoil 28. More particularly, the rotor blade 20 of FIG. 4 is configured with the internal artifact(s) 42 arranged within or otherwise with at least (or only) one internal volume 44 of the rotor blade 20 and its blade airfoil 28. For ease of description, this internal volume 44 may be described below as an air flow passage such as one of the distribution passages 36 of FIGS. 1-3. The present invention, however, is not limited to such an exemplary arrangement. The internal volume 44, for example, may alternatively be an internal channel, an internal cavity, an internal plenum, an internal passage or any other internal airspace within the rotor blade 20 and its blade airfoil 28. Moreover, while the internal artifact(s) 42 are generally described above as being within the interior of the blade airfoil 28, it is contemplated one or more or all of the internal artifact(s) 42 may also or alternatively be disposed within another member of the rotor blade 20; e.g., the blade platform 26 and/or the blade attachment 24.

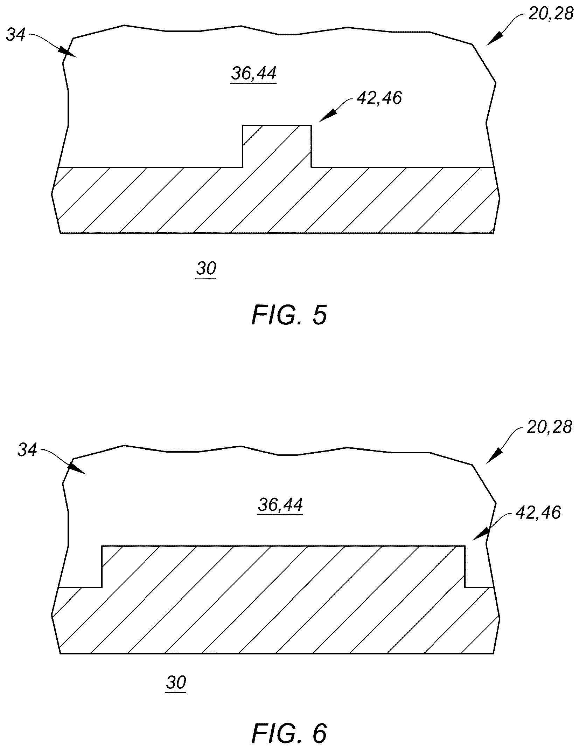

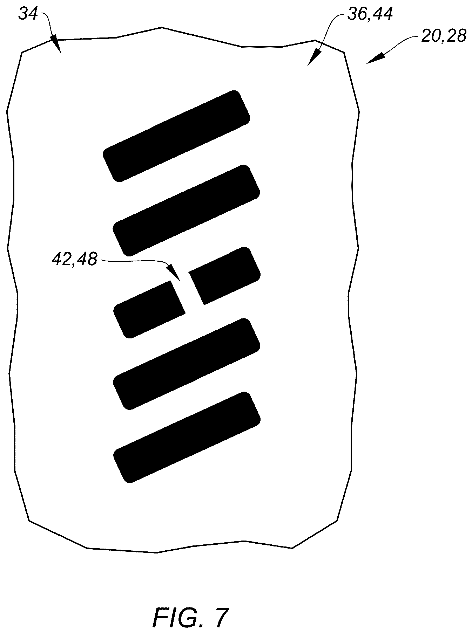

Each internal artifact 42 is configured as a feature of the rotor blade 20 which may be repeatably and accurately observed (e.g., scanned and resolved) by a computed tomography (CT) machine. For example, referring to FIGS. 5 and 6, one or more of the internal artifact(s) 42 may each be configured as a protrusion 46 which projects partially into the internal volume 44 to a distal, unsupported end of the respective internal artifact 42. This protrusion 46 may be a dedicated artifact for the computed tomography machine. Alternatively, the protrusion 46 may also be configured as an airflow turbulator, a cooling element, a structural reinforcement and/or the like for the rotor blade 20 and its blade airfoil 28 along a respective one of the cooling air circuits 34. Each internal artifact 42, for example, may be configured as a pedestal (e.g., a point protrusion), a trip strip (e.g., an elongated protrusion or a chevron), a reinforcement and/or stiffening rib, etc. In another example, referring to FIG. 7, one or more of the internal artifact(s) 42 may each be configured as an aperture along the internal volume 44. The internal artifact 42 of FIG. 7, for example, is configured as a groove 48; e.g., a slot in a trip strip or a channel defined between a neighboring pair of trip strips.

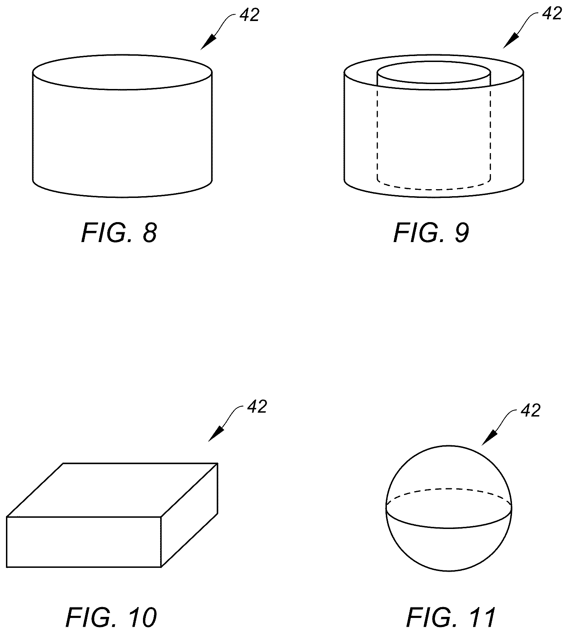

Referring to FIGS. 8-11, to facilitate observability and/or clarity for the computed tomography machine, each internal artifact 42 may be shaped as or similar to a geometric primitive. The internal artifact 42 of FIG. 8, for example, is configured with a solid cylindrical geometry. The internal artifact 42 of FIG. 9 is configured with an annular cylindrical geometry; e.g., a hollow cylindrical geometry. The internal artifact 42 of FIG. 10 is configured with a polyhedron geometry. Examples of the polyhedron include, but are not limited to, a rectangular prism, a cuboid and a tetrahedron. The internal artifact 42 of FIG. 11 is configured with a spherical geometry. The present invention, however, is not limited to such exemplary internal artifact geometries.

Referring to FIG. 4, each of the internal artifact(s) 42 is associated with known dimensional data. For example, each internal artifact 42 of FIG. 4 has a known (e.g., premeasured, precisely formed, etc.) internal artifact size; e.g., width, length, height, diameter, etc. In another example, each set of internal artifacts 42 of FIG. 4 has a known (e.g., premeasured, precisely formed, etc.) inter-artifact measurement; e.g., a distance between boundaries of the internal artifacts 42, a distance between centers (e.g., centroids) of the internal artifacts 42, etc.

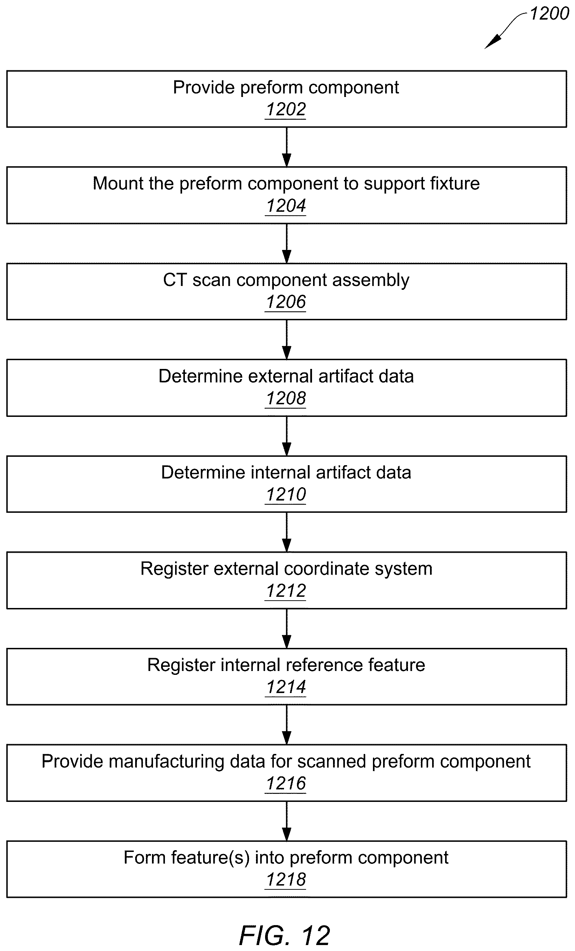

FIG. 12 is a flow diagram of a method 1200 of manufacture. For ease of description, this manufacturing method 1200 is described below with reference to the rotor blade 20 described above. The method 1200 of the present invention, however, is not limited to manufacturing such an exemplary apertured component. For example, in other embodiments, the method 1200 may be used for manufacturing a fluid cooled stator vane, a fluid cooled flowpath wall or any other component which may include internal feature(s) to facilitate in its manufacture as described herein.

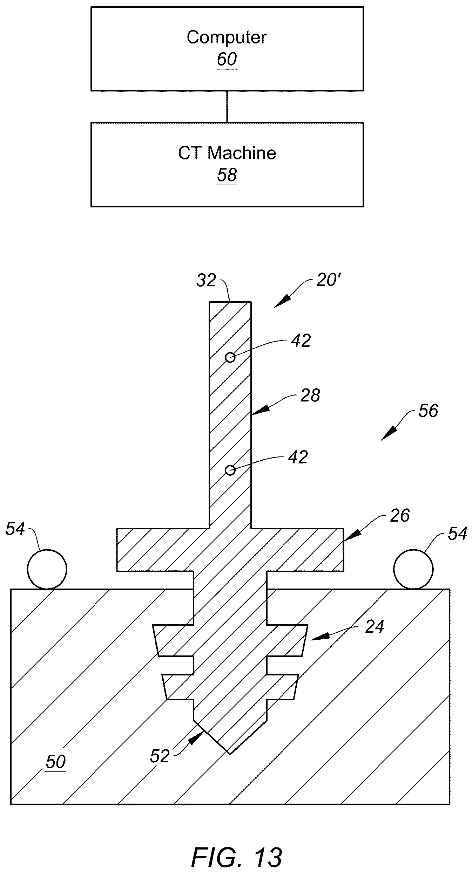

In step 1202, referring to FIG. 13, a preform component 20' is provided. The preform component 20', for example, may be cast, forged, machined, additively manufactured and/or otherwise formed. The preform component 20' is a preform of the rotor blade 20 of FIG. 1 (the aperture component) to be manufactured using the manufacturing method 1200. The preform component 20' of FIG. 13, for example, may have a similar configuration as the to be manufactured rotor blade 20 of FIG. 1. In particular, an exterior surface geometry of the preform component 20' may match an exterior surface geometry of the to be manufactured rotor blade 20 of FIG. 1. The preform component 20' of FIG. 13 includes the cooling circuit distribution passage(s) 36 (see FIG. 1) and the internal artifacts 42 within an interior of the preform component 20'. However, the preform component 20' of FIG. 13 is configured without some or any of the cooling apertures 38 (see FIG. 1).

In step 1204, the preform component 20' of FIG. 13 is mounted to a support fixture 50. The blade attachment 24 of the preform component 20', for example, may be mated with (e.g., received within) a slot 52 in the support fixture 50. The blade attachment 24 may also be locked into the support fixture slot 52. The preform component 20' may thereby be fixed to and supported by the support fixture 50.

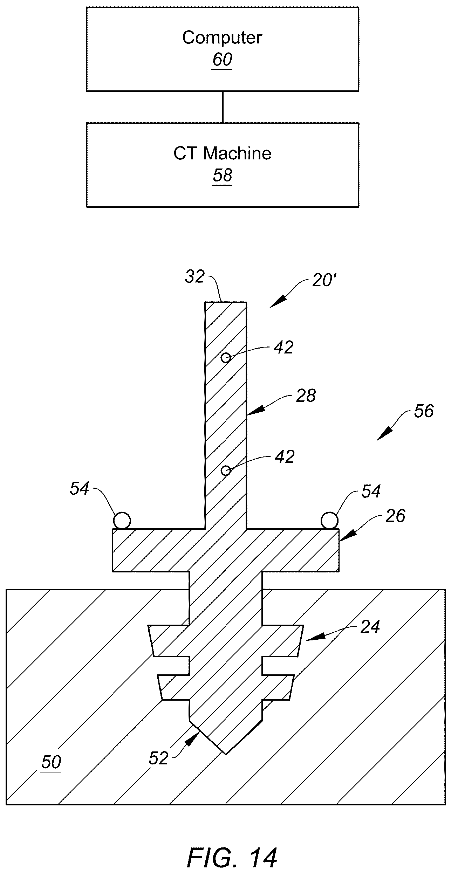

While mounted to the support fixture 50, the preform component 20' of FIG. 13 is arranged with one or more external artifacts 54; e.g., objects, protrusions, apertures, etc. The external artifact(s) 54 may be attached to, formed integral with or otherwise connected to the support fixture 50. Alternatively, referring to FIG. 14, the external artifact(s) 54 may be attached to, formed integral with or otherwise connected to the preform component 20'. Referring again to FIG. 13, each of the external artifact(s) 54 is associated with known dimensional data. For example, each external artifact 54 of FIG. 13 has a known (e.g., premeasured, precisely formed, etc.) external artifact size; e.g., width, length, height, diameter, etc. In another example, each set of external artifacts 54 of FIG. 13 has a known (e.g., premeasured, precisely formed, etc.) inter-artifact measurement; e.g., a distance between boundaries of the external artifacts 54, a distance between centers (e.g., centroids) of the external artifacts 54, etc.

A combination of at least (or only) the preform component 20', the support fixture 50 and the external artifact(s) 54 may collectively form a component assembly 56. In step 1206, this component assembly 56 is computed tomography (CT) scanned using a computed tomography (CT) machine 58 to provide computed tomography (CT) scan data. The scan data includes voxel data; e.g., volumetric pixel data. Within the scan data, relatively bright voxels may represent materials forming the preform component 20' (including its internal artifact(s) 42), the support fixture 50 and the external artifact(s) 54. By contrast, relatively dark voxels may represent voids within the materials forming the preform component 20' and/or surrounding the component assembly members 20', 50, 54.

In step 1208, external artifact data for the external artifact(s) 54 is determined using, for example, a computer 60 for the computed tomography machine 58. The computer 60, for example, may process the scan data using various techniques (e.g., thresholding, etc.) to determine the external artifact data. The external artifact data is indicative of a physical characteristic (e.g., a scanned volumetric geometry, a scanned surface geometry, etc.) of the scanned external artifact(s) 54; e.g., a grouping of the relatively dark voxels representing the scanned external artifact(s) 54. The external artifact data may include one or more Cartesian coordinates (e.g., x-y-z coordinates) and/or one or more unit vector coordinates (e.g., i-j-k coordinates) associated with the Cartesian coordinates.

In step 1210, internal artifact data for the internal artifact(s) 42 is determined using, for example, the computer 60. The computer 60, for example, may again process the scan data using various techniques (e.g., thresholding, etc.) to determine the internal artifact data. The internal artifact data is indicative of a physical characteristic (e.g., a scanned volumetric geometry, a scanned surface geometry, etc.) of the scanned internal artifact(s) 42; e.g., a grouping of the relatively dark voxels representing the scanned internal artifact(s) 42. The internal artifact data may include one or more Cartesian coordinates (e.g., x-y-z coordinates) and/or one or more unit vector coordinates (e.g., i-j-k coordinates) associated with the Cartesian coordinates.

For ease of description, the step 1210 is described as being performed following the step 1208. However, it is contemplated the step 1210 may alternatively be performed prior to or simultaneously with the step 1208 during performance of the manufacturing method 1200.

In step 1212, a first external coordinate system is registered for the scanned preform component 20' using, for example, the computer 60. This first external coordinate system is determined based on the external artifact data. For example, one of the scanned external artifacts 54 may be identified as an origin for the first external coordinate system. A collective arrangement of the scanned external artifacts 54 may then be used to set the first external coordinate system off of the origin.

In step 1214, an internal reference feature is registered for the scanned preform component 20' using, for example, the computer 60. Examples of the internal reference feature include an internal reference point and an internal reference vector. The internal reference feature is determined based on the internal artifact data. For example, the computer 60 may process the internal artifact data to identify the internal reference point based on a location of a single internal artifact 42 or, for example, a center between a grouping of the internal artifacts 42. In another example, the computer 60 may process the internal artifact data to derive the internal reference vector from a grouping of the internal artifacts 42 (e.g., extend a line between neighboring internal artifacts 42).

In step 1216, manufacturing data is provided for the scanned preform component 20'. For example, the computer 60 may locate the internal reference feature within the external coordinate system. More particularly, the computer 60 may locate the internal reference feature within the external coordinate system relative to an external surface feature (e.g., a surface, an edge, a bend, a tip, a corner, etc.) of the scanned preform component 20'. In this way, the computer 60 may provide information about how an internal configuration of the scanned preform component 20' compares to an expected internal configuration of a preform component design model. This information may be particularly useful where slight core shifts may occur, for example, when forming the preform component 20' by casting with one or more casting cores. Here, the manufacturing data may be uniquely assigned to the specific preform component 20' which was scanned during the step 1206.

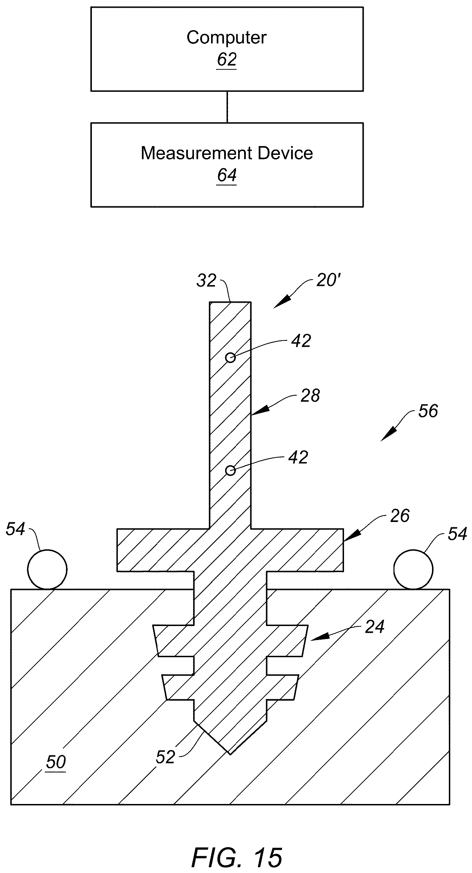

In step 1218, one or more features are formed in the preform component 20' using the manufacturing data. For example, the component assembly 56 may be transferred (e.g., physically moved, transported, etc.) from a scanning area in which the computed tomography scanning was performed (step 1206) to a spatially remote machining area for the performance of the formation step 1218. Referring to FIG. 15, a computer 62 for this machining area may receive the manufacturing data from the other computer 60 through, for example, wired signal communication, wireless signal communication and/or other communication techniques (e.g., use of a portable drive or memory).

Using data received from a measurement device 64 at the machining area such as a coordinate measurement device, a structured light measurement device, etc., the computer 62 may register a second external coordinate system for the preform component 20' based on the same external artifact(s) 54 used to register the first external coordinate system. Here, the second external coordinate system is identical to (or relatable to) the first external coordinate system and, thus, the external coordinate system is effectively re-registered at the machining area. The computer 62 may thereby locate the internal reference feature within the second external coordinate system using the manufacturing data.

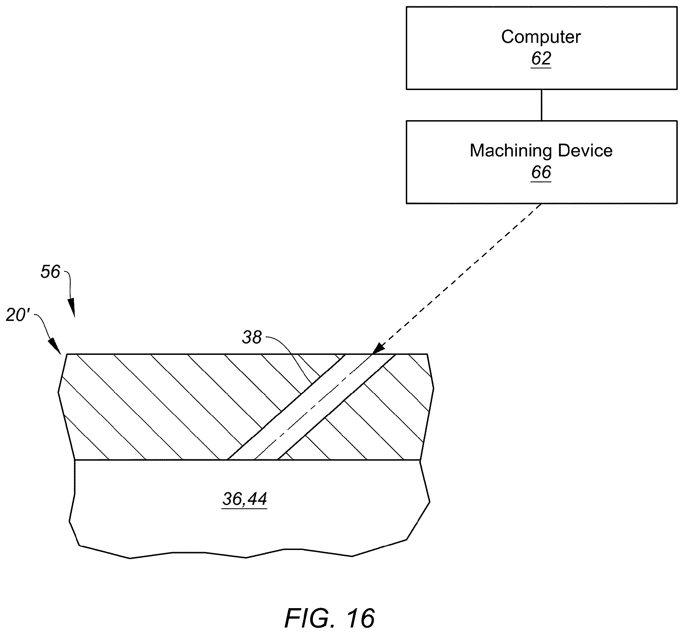

To account for any (e.g., slight) differences between the internal configuration of the scanned preform component 20' compared to the expected internal configuration of the preform component design model, the computer 62 may update a machining program for the formation of the feature(s) and provide an updated machining program. Referring to FIG. 16, this updated machining program may then be implemented using a machining device 66 controlled by the computer 62 at the machining area to form the feature(s) into the preform component 20'. Here, the feature(s) formed into the preform component 20' is/are the cooling aperture(s) 38. Therefore, following the formation of these cooling aperture(s) 38, the rotor blade 20 may be formed from the preform component 20'.

The machining may be performed using various machining processes; e.g., drilling processes. For example, the feature(s) may be machined using a laser drilling process such as, but not limited to, a percussion laser drilling process, a trepanning laser drilling process, or a scanning laser drilling process. In another example, the feature(s) may be machined using an electron beam machining process. In another example, the feature(s) may be machined using a water jet drilling process. In another example, the feature(s) may be machined using an electrical discharge machining (EDM) process; e.g., where the coating material(s) are electrically conductive. In still another example, the feature(s) may be machined using a mechanical drilling process. The present invention, however, is not limited to the foregoing exemplary machining processes.

In some embodiments, the preform component 20' may be an uncoated object; e.g., a bare metal object. The preform component 20' may subsequently be coated (as needed) following the machining of the cooling aperture(s) 38, for example. In other embodiments, the preform component 20' may be a coated object; e.g., a coated metal object. In such embodiments, the cooling aperture(s) 38 may be machined into and/or through a coating into an underlying substrate.

While various embodiments of the present invention have been described, it will be apparent to those of ordinary skill in the art that many more embodiments and implementations are possible within the scope of the invention. For example, the present invention as described herein includes several aspects and embodiments that include particular features. Although these features may be described individually, it is within the scope of the present invention that some or all of these features may be combined with any one of the aspects and remain within the scope of the invention. Accordingly, the present invention is not to be restricted except in light of the attached claims and their equivalents.

## Claims

1. A method of manufacture, comprising:
scanning a component (20') with an external artifact (54) and an internal artifact (42) using a computed tomography machine (58) to provide scan data, wherein the internal artifact (42) is disposed within an interior of the component (20');
determining external artifact data and internal artifact data based on the scan data, wherein the external artifact data is indicative of a physical characteristic of the external artifact (54), and the internal artifact data is indicative of a physical characteristic of the internal artifact (42);
registering a first external coordinate system for the component (20') based on the external artifact data;
registering an internal reference feature for the component (20') based on the internal artifact data;
providing manufacturing data for the component (20'), wherein the internal reference feature is located within the first external coordinate system during the providing of the manufacturing data; and
forming a feature into the component (20') using the manufacturing data.

2. The method of claim 1, wherein the scanning of the component (20') comprises scanning an external surface feature of the component (20'), and the manufacturing data locates the internal reference feature relative to the external surface feature of the component (20') within the first external coordinate system.

3. The method of claim 1 or 2, wherein the forming of the feature into the component (20') comprises machining the feature into the component (20').

4. The method of any preceding claim, wherein the forming of the feature into the component (20') comprises:
updating a machining program for forming the feature into the component (20') using the manufacturing data to provide an updated machining program; and
machining the feature into the component (20') using the updated machining program.

5. The method of claim 4, further comprising registering a second external coordinate system for the component (20') using a measurement device (64) discrete from the computed tomography machine (58), wherein the second external coordinate system is identical to or relatable to the first external coordinate system, and the machining of the feature into the component (20') is performed using the updated machining program and the second external coordinate system.

6. The method of any of claims 3 to 5, further comprising communicating the manufacturing data from a first computer (60) to a second computer (62), wherein the manufacturing data for the component (20') is provided using the first computer (60), and the machining of the feature into the component (20') is performed using the second computer (62).

7. The method of any preceding claim, wherein:
the internal reference feature is a reference point; or
the internal reference feature is a reference vector.

8. The method of any preceding claim, wherein the component (20') comprises an airfoil (28), and the internal artifact (42) is disposed within an internal volume (44) within the airfoil (28).

9. The method of any preceding claim, wherein the internal artifact (42) comprises an annular cylinder.

10. The method of any preceding claim, wherein:
the internal artifact (42) comprises an airflow turbulator within the component; and/or
the internal artifact (42) comprises a cooling element within the component.

11. The method of any preceding claim, wherein the internal artifact (42) comprises an aperture in the interior of the component.

12. The method of any preceding claim, wherein:
the internal artifact (42) is one of a plurality of internal artifacts (42) within the interior of the component (20'), and the internal artifact data is indicative of a physical characteristic of each of the plurality of internal artifacts (42) and/or a collective physical characteristic of the plurality of internal artifacts (42); and/or
the external artifact (54) is one of a plurality of external artifacts (54) scanned using the computed tomography machine (58), and the external artifact data is indicative of a physical characteristic of each of the plurality of external artifacts (54) and/or a collective physical characteristic of the plurality of external artifacts (54).

13. The method of any preceding claim, wherein the feature formed into the component is a cooling aperture (38) machined into the component (20').

14. A method of manufacture, comprising:
computed tomography scanning a component assembly (56) to provide scan data, wherein the component assembly (56) includes a component (20'), a fixture (50) and an external artifact (54), the component (20') is mounted to the fixture (50) and comprises an internal artifact (42) within an interior of the component (20'), and the external artifact (54) is arranged external to the component (20');
determining external artifact data and internal artifact data based on the scan data, wherein the external artifact data is indicative of a scanned geometry of the external artifact (54), and the internal artifact data is indicative of a scanned geometry of the internal artifact (42);
registering a first external coordinate system for the component (20') based on the external artifact data;
registering an internal reference point for the component (20') based on the internal artifact data;
updating a machining program based on data indicative of or derived from a location of the internal reference point within the first external coordinate system to provide an updated machining program; and
machining a feature into the component (20') using the updated machining program, wherein, optionally, the internal artifact (42) projects into an internal volume (44) within the component (20').

15. A method of manufacture, comprising:
computed tomography scanning a component assembly (56) to provide scan data, wherein the component assembly (56) includes a component (20'), a fixture (50) and an external artifact (54), the component (20') is mounted to the fixture (50) and comprises an internal artifact (42) within an interior of the component (20'), and the external artifact (54) is arranged external to the component (20');
determining external artifact data and internal artifact data based on the scan data, wherein the external artifact data is indicative of a scanned geometry of the external artifact (54), and the internal artifact data is indicative of a scanned geometry of the internal artifact (42);
registering a first external coordinate system for the component (20') based on the external artifact data;
registering an internal reference vector for the component (20') based on the internal artifact data;
updating a machining program based on data indicative of or derived from a location of the internal reference vector within the first external coordinate system to provide an updated machining program; and
machining a feature into the component (20') using the updated machining program, wherein, optionally, the internal artifact (42) comprises a protrusion (46) within the interior of the component (20').
